## Europäisches Patentamt

## European Patent Office

## Office européen des brevets

(19)

(11) Veröffentlichungsnummer: **0 166 855**
**B1**

(12)

# EUROPÄISCHE PATENTSCHRIFT

(45) Veröffentlichungstag der Patentschrift:
**08.06.88**

(21) Anmeldenummer: **85102036.2**

(22) Anmeldetag: **23.02.85**

(51) Int. Cl.⁴: **F 16 K 27/02,** F 16 K 1/226,
F 16 K 41/04

(54) **Absperrklappe für aggressive Durchflussmedien.**

(30) Priorität: **06.07.84 DE 3424924**

(43) Veröffentlichungstag der Anmeldung:
**08.01.86 Patentblatt 86/2**

(45) Bekanntmachung des Hinweises auf die Patenterteilung:
**08.06.88 Patentblatt 88/23**

(84) Benannte Vertragsstaaten:
**AT BE CH DE FR GB IT LI NL**

(56) Entgegenhaltungen:
**CH-A-594 839**
**DE-A-2 648 519**
**DE-A-2 758 690**
**DE-A-2 801 049**
**DE-A-2 925 004**
**DE-A-3 313 904**
**US-A-3 096 070**
**US-A-3 334 650**
**US-A-3 778 028**

(73) Patentinhaber: **Herberholz, Günter, Hollmann Böschken 37, D-5600 Wuppertal 2 (DE)**

(72) Erfinder: **Herberholz, Günter, Hollmann Böschken 37, D-5600 Wuppertal 2 (DE)**

(74) Vertreter: **Peerbooms, Rudolf, Dipl.- Phys., Postfach 200 208 Dickmannstrasse 45C, D-5600 Wuppertal 2 (DE)**

EP 0 166 855 B1

LIBER, STOCKHOLM 1988

**Beschreibung**

Die Erfindung betrifft eine Absperrklappe für aggressive Durchflußmedien, welche aus einem mit einem hartelastischen, ungepolsterten Kunststoffmantel ausgekleideten, rohrförmigen Metallgehäuse und aus einer hartabdichtenden, mit einem ungepolsterten Überzug versehenen Absperrscheibe besteht, die um zwei den Gehäusemantel durchsetzende Zapfen drehbar gelagert ist und in der die Zapfenachse enthaltenden Diametralebene das rohrförmige Metallgehäuse abdichtet, wobei die abdichtende Umfangsfläche des Absperrscheiben-Überzuges die Form einer symmetrischen Kugelausschnittfläche besitzt und die Zapfen von gesonderten, hartelastischen, unmittelbar an den Zapfen anliegenden Dichtbuchsen umschlossen sind, die auf der überzogenen Dichtscheibe aufsitzen und durch rückwärtige Widerlagermuttern einzeln nachstellbar sind, wobei der Absperrscheiben-Überzug aus Hartkunststoff besteht und eine Mindeststärke von drei Millimetern aufweist und wobei zwischen den Dichtbuchsen und den Widerlagermuttern je ein Druckglied zwischengeschaltet ist.

Durch die DE-A-2 758 690 ist eine Absperrklappe für aggressive Durchflußmedien bekannt, bei welcher das rohrförmige Metallgehäuse mit einem hartelastischen, ungepolsterten Kunststoffmantel ausgekleidet und die Absperrscheibe mit einem hartabdichtenden Tantalüberzug versehen ist. Die Drehzapfen der Absperrscheibe sind dabei von gesonderten, hartelastischen Dichtbuchsen umschlossen, die auf der Dichtscheibe unmittelbar aufsitzen. Bei dieser Materialpaarung von Scheibenüberzug und Dichtbuchsen kann ein Vordringen von aggressiven Durchflußmedien zu den Drehzapfen hin sicher verhindert werden. Allerdings ist aufgrund der unterschiedlichen Temperaturausdehnung von Hartkunststoffmantel und metallischer Dichtscheibe die Absperrklappe nach der DE-A-2 758 690 jeweils nur in begrenzten Temperaturbereichen einsetzbar.

In der DE-A-3 313 904 desselben Anmelders ist vorgesehen, die Dichtscheibe mit einem Überzug aus PFA mit einer Mindeststärke von drei Millimetern zu versehen, wodurch der zulässige Temperaturbereich erheblich erweitert wird. Durch den Druck der Dichtbuchsen auf den Hartkunststoffüberzug der Dichtscheibe kann es hier jedoch zu einem Kriechen des Dichtscheiben-Überzuges kommen, was in einzelnen Fällen zu geringen Undichtigkeiten führt. Bei aggressiven Durchflußmedien haben aber derartige Leckagen bereits in minimalem Umfang eine Zerstörung der Drehzapfen zur Folge.

Durch die US-A-3 096 070 ist eine Absperrklappe bekannt, bei welcher der Ringspalt zwischen Drehzapfen und Klappengehäuse durch ein Paket von V-förmigen Dichtringen, sogenannten Dachmanschettenringen, abgedichtet ist. Die V-förmigen Dichtringe sind dort in axialer Richtung zwischen einer Ringschulter des Gehäusedurchbruches in einer eine Gewindebohrung des Gehäuses eingeschraubten Widerlagermutter eingespannt, und ihre Dichtränder liegen einerseits an der zylindrischen Wandung des Gehäusedurchbruches und andererseits am Drehzapfen stramm an. Da die Dichtringe im mittleren Bereich der Drehzapfen angeordnet sind, bleiben die innenliegenden Enden der Drehzapfen und das Gehäuse dem Angriff des Durchflußmediums ausgesetzt, weshalb die dortige Absperrklappe nicht für chemisch aggressive Medien eingesetzt werden kann.

Der Erfindung liegt daher die Aufgabe zugrunde, diese bekannte Absperrklappe dahingehend zu verbessern, daß ihr Metallgehäuse und ihre Drehzapfen zuverlässig gegenüber aggressiven Durchflußmedien abgedichtet sind und daß die Abdichtwirkung über einen großen Temperaturbereich hinweg voll wirksam bleibt.

Diese Aufgabe ist Erfindungsgemäß dadurch gelöst, daß die Dichtbuchsen mit einer keilförmigen Stirnfläche jeweils in eine V-förmige Ringnut des Scheiben-Überzuges eingepreßt und daß die Keilwinkel der Dichtbuchsen größer als die Nutwinkel sind. Schon bei sehr geringen Andruckkräften läßt sich auf diese Weise eine sehr hohe Anpressung zwischen den Stirnflächen der Dichtbuchsen und den Seitenwänden der V-Nuten erreichen, wobei auch nach einem seitlichen Kriechen des Scheiben-Überzuges immer noch eine einwandfreie Anlage zwischen diesen Flächen erhalten bleibt. Infolgedessen sind bei der erfindungsgemäßen Absperrklappe die Vorteile eines großen Temperatureinsatzbereiches und einer sicheren Abdichtung von Metallgehäuse und Drehzapfen gegenüber aggressiven Durchflußmedien miteinander vereinigt.

Der Erfindung zufolge kann jeder Zapfen von mindestens zwei axial hintereinander angeordneten Dichtbuchsen umschlossen sein und kann die innere Dichtbuchse an ihrer rückwärtigen Stirnfläche eine V-Nut aufweisen, in welche die äußere Dichtbuchse mit einer keilförmigen Stirnfläche eingepreßt ist. Durch diese Reihenanordnung von mindestens zwei Dichtbuchsen können Exzentrizitäten ausgeglichen werden, die bei der Herstellung der keilförmigen Stirnflächen der Dichtbuchsen und/oder bei dem Einbringen der V-förmigen Ringnut in den Scheiben-Überzug auftreten. Auch im Falle derartiger, häufig unvermeidlicher Fertigungsmängel ist damit eine einwandfreie Dichtwirkung gewährleistet.

In weiterer Ausgestaltung der Erfindung kann die Übergangsstelle zwischen den beiden Dichtbuchsen im Bereich der Gehäuseauskleidung liegen. Durch diese Anordnung kann die innere Dichtbuchse nicht nur

eine verbesserte Dichtwirkung in radialer Richtung zur Zapfenachse entfalten, sondern auch in axialer Richtung zum Metallgehäuse.

In weiterer Ausgestaltung der Erfindung können die Keilspitzen gebrochen sein. Damit sind die Dichtbuchsen jederzeit in axialer Richtung nachstellbar.

Nach einer bevorzugten Ausführungsform der Erfindung können der Überzug der Absperrscheibe aus PFA und die Dichtbuchsen aus PTFE bestehen. Da PTFE etwas weicher als PFA ist, kommt es im Dauerbetrieb fast ausschließlich zu einer Abnutzung der relativ preiswerten Dichtbuchsen, während der Scheiben-Überzug praktisch unversehrt bleibt.

Nach mehrfachem Nachstellen der Dichtbuchsen können diese daher routinemäßig ausgewechselt werden, womit insgesamt eine sehr hohe Lebensdauer der zentralen Elemente der Absperrklappe sichergestellt ist.

Die Erfindung wird im folgenden anhand der Zeichnung näher erläutert. In der Zeichnung zeigen:

Fig. 1 eine Vorderansicht der Absperrklappe,

Fig. 2 die Absperrklappe gemäß einem Schnitt II-II in Fig. 1,

Fig. 3 die Absperrklappe gemäß einem Schnitt III-III in Fig. 1,

Fig. 4 die unteren Dichtbuchsen der Absperrklappe gemäß einem Schnitt IV in Fig. 3,

Fig. 5 eine vergrößerte Darstellung der Zuordnung von scheibenseitiger V-Nut und der keilförmigen Stirnfläche einer Dichtbuchse gemäß einem Ausschnitt V in Fig. 4,

Fig. 6 eine vergrößerte Darstellung des Übergangs zwischen zwei Dichtbuchsen gemäß einem Ausschnitt VI in Fig. 4 und

Fig. 7 eine zweite Konstellation der Dichtbuchsen der Absperrklappe in einer analogen Darstellung zu Fig. 4.

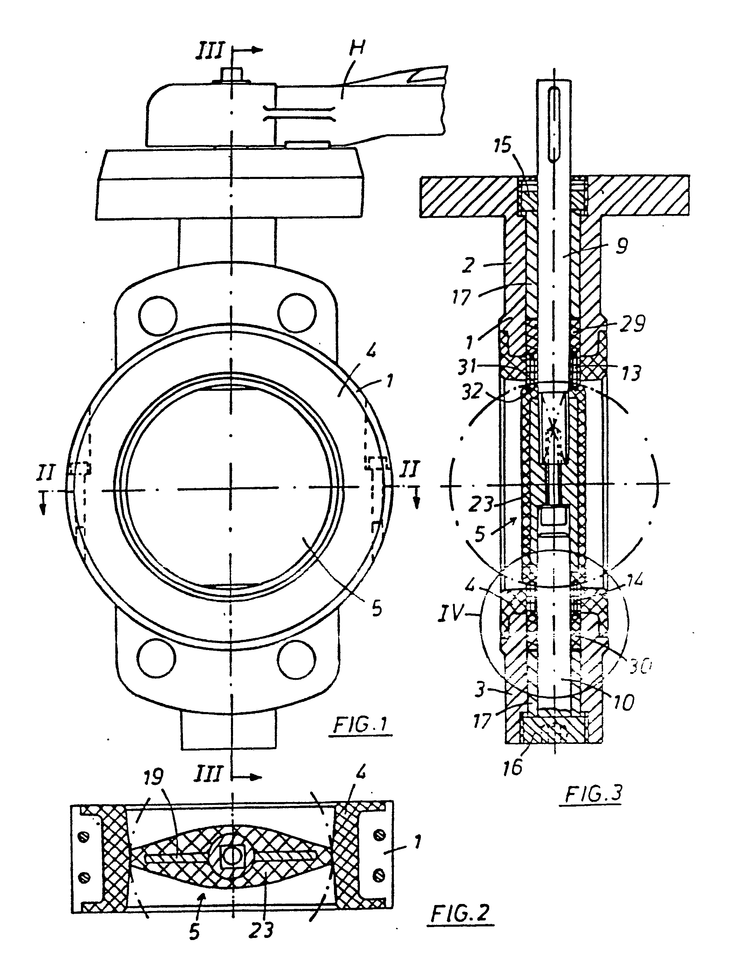

Die Fig. 1 bis 6 zeigen eine Absperrklappe für aggressive Durchflußmedien mit einem rohrförmigen Metallgehäuse 1, welches mit einem hartelastischen, ungepolsterten Kunststoffmantel 4, z. B. aus PTFE, ausgekleidet ist. Damit der Kunststoffmantel 4 bequem montierbar ist, ist das Metallgehäuse 1 in seiner horizontalen Mittelebene geteilt und durch gestrichelt gezeichnete Spannschrauben zusammengehalten, vergl. Fig. 1.

Die innere Öffnung des rohrförmigen Metallgehäuses 1 ist durch eine Absperrscheibe 5 verschließbar, welche aus einem Stahlkern 19 mit einem hartabdichtenden, ungepolsterten Überzug 23, z. B. aus aufgesintertem PFA, von mindestens drei Millimetern Stärke besteht. Die Absperrscheibe 5 ist um zwei den Gehäusemantel 4 durchsetzende Zapfen 9, 10 drehbar gelagert, wobei der obere Zapfen 9 über einen Vierkant mit der Scheibe 5 und über eine Paßfeder mit einem Betätigungshebel H drehfest verbunden ist.

Die Scheibe 5 dichtet das Metallgehäuse 1 in der die Zapfenachsen enthaltenden Diametralebene ab, wobei die abdichtende Umfangsfläche die Form einer symmetrischen Kugelausschnittsfläche besitzt, wie durch die strichpunktierten Kreise in den Fig. 2 und 3 angedeutet ist. Wie aus einem Vergleich der Fig. 2 und 3 ersichtlich ist, nimmt die Breite der Umfangsfläche von den oberen und unteren Lagerstellen der Scheibe 5 bis zur horizontalen Mittelebene kontinuierlich ab, wodurch sich einerseits eine optimale Abdichtung, andererseits eine leichte Bedienbarkeit der Absperrklappe ergibt. Die Scheibe 5 ist auf ihren Stirnseiten mit einem glattwandigen Strömungsprofil versehen, so daß sich keine abrasiven Stoffe ablagern können.

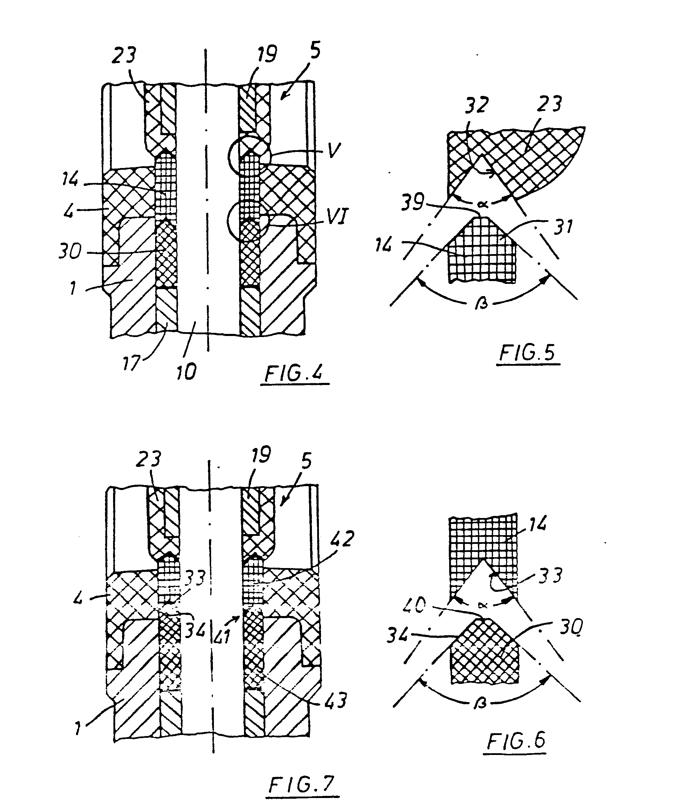

Die Zapfen 9, 10 sind im Bereich der Lagerstellen von gesonderten, hartelastischen Dichtbuchsen 13, 14, 29, 30 umschlossen, die vorzugsweise aus PTFE bestehen. Wie in den Fig. 4 bis 6 für das Beispiel der unteren Lagerstellen gezeigt ist, ist die innere Dichtbuchse 14 - entsprechend auch die Dichtbuchse 13 an der anderen Lagerstelle mit keilförmigen Stirnflächen 31 in eine V-förmige Ringnut 32 des Scheiben-Überzuges 23 eingepreßt. Hierdurch ergibt sich eine hervorragende radiale Abdichtung der Zapfen 9, 10. Um evtl. Exzentrizitäten bei der Fertigung auszugleichen, ist den inneren Dichtbuchsen 13, 14 jeweils eine zweite äußere Dichtbuchse 29, 30 axial nachgeschaltet, wobei die innere Dichtbuchse 13, 14 an ihrer rückseitigen Stirnfläche eine V-Nut 33 aufweist, in welche die äußere Dichtbuchse 29, 30 mit einer keilförmigen Stirnfläche 34 eingepreßt ist. Die Pakete aus den Dichtbuchsen 13, 14, 29, 30 sind durch rückwärtige Widerlagermuttern 15, 16 einzeln für sich nachstellbar, wobei zwischen den Dichtbuchsen 13, 29 bzw. 14, 30 und den Widerlagermuttern 15, 16 jeweils ein Druckglied 17 in Form einer Lagerhülse zwischengeschaltet ist. Durch diese Lagerhülsen 17 erstrecken sich die Dichtbuchsen 13, 14, 29, 30 nur über eine Strecke, die für eine ausreichende Abdichtung des Gehäuses 1 wirklich erforderlich ist. Die bei der axialen Pressung auftretende radiale Verbreiterung der Dichtbuchsen 13, 14, 29, 30 erzeugt damit eine so geringe Klemmwirkung, daß die Absperrscheibe 5 leicht drehbar bleibt. Im übrigen sorgen die Lagerhülsen 17 für eine einwandfreie Führung der Zapfen 9, 10.

Wie in den Fig. 5 und 6 dargestellt, sind die Keilwinkel β der Stirnflächen 31, 34 der Dichtbuchsen 13, 14, 29, 30 jeweils größer als die zugeordneten Nutwinkel α der Nuten 32 bzw. 33 Auf diese Weise wird eine hohe Anpressung der Dichtflächen auch dann erreicht, wenn beispielsweise der Scheiben-Überzug 23 durch Kriechen seitlich ausweicht. Darüber hinaus sind die Keilspitzen 39, 40 gebrochen, was ebenfalls für eine eindeutig definierte Zuordnung der Dichtflächen auch bei gewissen Fertigungsschwankungen sorgt. Im übrigen ist durch diese Maßnahme ein axiales Nachstellen der Dichtbuchsen 13, 14, 29, 30 über die Widerlagermuttern 15, 16 möglich. Durch die Kombination des Scheiben-Überzuges 23 aus PFA und der Dichtbuchsen 13, 14 aus etwas weicherem PTFE erfolgt eine Abnutzung vornehmlich an den Stirnflächen 31 der Dichtbuchsen 13, 14.

Das Ausführungsbeispiel nach Fig. 7 ist grundsätzlich identisch zu der Ausgestaltung nach Fig. 1 bis 6. Der einzige Unterschied besteht darin, daß die Übergangsstelle 41 zwischen den beiden Dichtbuchsen 42, 43 noch im Bereich des Gehäusemantels 4 liegt. Durch diese räumliche Anordnung von V-Nut 33 und keilförmiger Stirnfläche 34 ergibt sich hier eine verstärkte radiale Aufweitung der Buchsen 42, 43 unter dem Einfluß einer axialen Zusammenpressung. Von daher wird ein Vordringen von aggressiven Medien in den Spalt zwischen der inneren Buchse 42 und dem Mantel 4 spätestens an der Übergangsstelle 41 unterbunden, so daß das Metallgehäuse 1 besonders zuverlässig geschützt ist.

## Patentansprüche

1. Absperrklappe für aggressive Durchflußmedien, welche aus einem mit einem hartelastischen, ungepolsterten Kunststoffmantel (4) ausgekleideten, rohrförmigen Metallgehäuse (1) und aus einer hartabdichtenden, mit einem ungepolsterten Überzug (23) versehenen Absperrscheibe (5) besteht, die um zwei den Gehäusemantel (4) durchsetzende Zapfen (9, 10) drehbar gelagert ist und in der die Zapfenachse enthaltenden Diametralebene das rohrförmige Metallgehäuse (1) abdichtet, wobei die abdichtende Umgangsfläche des Absperrscheiben-Überzuges (23) die Form einer symmetrischen Kugelausschnittfläche besitzt und die Zapfen (9, 10) von gesonderten, hartelastischen, unmittelbar an den Zapfen anliegenden Dichtbuchsen (13, 14) umschlossen sind, die auf der überzogenen Absperrscheibe (5) aufsitzen und durch rückwärtige Widerlagermuttern (15, 16) einzeln nachstellbar sind, wobei der Absperrscheiben-Überzug (23) aus Hartkunststoff besteht und eine Mindeststärke von drei Millimetern aufweist und wobei zwischen den Dichtbuchsen (13, 14) und den Widerlagermuttern (15, 16) je ein Druckglied (17) zwischengeschaltet ist, dadurch gekennzeichnet, daß die Dichtbuchsen (13, 14) mit einer keilförmigen Stirnfläche (31) jeweils in eine V-förmige Ringnut (32) des Scheiben-Überzuges (23) eingepreßt sind und daß die Keilwinkel (β) der Dichtbuchsen (13, 29, 14, 30) größer als die Nutwinkel (α) sind.

2. Absperrklappe nach Anspruch 1, dadurch gekennzeichnet, daß jeder Zapfen (9, 10) von mindestens zwei axial hintereinander angeordneten Dichtbuchsen (13, 29, 14, 30) umschlossen ist und daß die inneren Dichtbuchsen (13, 14) an ihrer rückwärtigen Stirnfläche eine V-Nut (33) aufweisen, in welche jeweils eine der äußeren Dichtbuchsen (29, 30) mit einer keilförmigen Stirnfläche (34) eingepreßt ist.

3. Absperrklappe nach den Ansprüchen 1 und 2, dadurch gekennzeichnet, daß die Übergangsstelle (41) zwischen den beiden Dichtbuchsen (13, 29 bzw. 14, 30) im Bereich des Gehäusemantels (4) liegt.

4. Absperrklappe nach Anspruch 1, dadurch gekennzeichnet, daß die Keilspitzen (39, 40) gebrochen sind.

5. Absperrklappe nach einem oder mehreren der Ansprüche 1 bis 4, dadurch gekennzeichnet, daß der Überzug (23) der Absperrscheibe (5) aus PFA und die Dichtbuchsen (13, 29, 14, 30) aus PTFE bestehen.

## Revendications

1. Clapet d'arrêt pour fluides de passage agressifs, qui est constitué d'un carter métallique (1) tubulaire, revêtu d'une enveloppe en matière plastique (4) non rembourrée, à l'élasticité d'un métal trempé et d'un disque d'arrêt (5) assurant l'étanchéité d'un métal trempé, muni d'un revêtement (23) non rembourré, qui est monté tournant autour de deux tourillons (9, 10) traversant l'enveloppe du carter (4) et qui obture de façon étanche le carter métallique (1) dans le plan diamétral contenant l'axe des tourillons, la surface périphérique du revêtement (23) du disque d'arrêt assurant l'étanchéité ayant la forme d'une surface de secteur sphérique symétrique et les tourillons (9, 10) étant entourés de manchons d'étanchéité (13, 14) particuliers, à l'élasticité d'un métal trempé, appliqués directement sur les tourillons qui reposent sur le disque d'arrêt revêtu (5) et qui sont réglables chacun par des écrous de butée (15, 16) arrière, le revêtement (23) du disque d'arrêt étant en matière plastique dure et ayant une épaisseur minimale de trois millimètres, et des organes de poussée (17) étant interposés respectivement entre les manchons d'étanchéité (13, 14) et les écrous de butée (15, 16), caractérisé par le fait que les manchons d'étanchéité (13, 14) à surface frontale (31) en forme de coin sont insérés dans une rainure annulaire (32), en forme de V, du revêtement (23) de disque et l'angle de coin (β) des manchons d'étanchéité (13, 29, 14, 30) est plus grand que l'angle (α) de la rainure.

2. Clapet d'arrêt selon la revendication 1, caractérisé par le fait que chaque tourillon (9, 10) est entouré d'au moins deux manchons d'étanchéité (13, 29, 14, 30) disposés axialement l'un derrière l'autre et les manchons d'étanchéité intérieurs (13, 14) possèdent, sur leur surface frontale arrière, une rainure en V (33), dans laquelle est inséré un des manchons d'étanchéité extérieurs (29, 30) à surface frontale (34) en forme de coin.

3. Clapet d'arrêt selon les revendications 1 et 2, caractérisé par le fait que la zone de transition (41) entre les deux manchons d'étanchéité (13, 29 et 14, 30) se trouve au voisinage de l'enveloppe de carter (4).

4. Clapet d'arrêt selon la revendication 1, caractérisé par le fait que les pointes de coins (39, 40) sont tronquées.

5. Clapet d'arrêt selon l'une ou plusieurs des revendications 1 à 4, caractérisé par le fait que le revêtement (23) du disque d'arrêt (5) est en PFA et les manchons d'étanchéité (13, 29, 14, 30) sont en PTFE.

## Claims

1. Butterfly valve for aggressive fluids comprising a tubular metal casing (1) which is lined with a hard elastic, unpadded, synthetic coating (4) and a close fitting shut-off disc (5) with unpadded coating (23), the shut-off disc (5) is pivoted on the two trunnions (9, 10) set in the lining of the casing (4) and in which the diametrical plane containing the trunnion axle seals the tubular metal casing (1), the circumferential surface of the shut-off disc coating (23) functioning as the seal is shaped like a symmetrical spherical sector and the trunnions (9, 10) are enclosed by separate hard elastic bushings which are directly fitted onto the trunnions, the bushings (13, 14) are positioned on the coated shut-off disc (5) and are individually adjustable by way of rearward abutment nuts (15, 16); the hard synthetic coating of the shut-off disc has a minimum thickness of 3 mm, inbetween each of the bushings (13, 14) and the abutment nuts (15, 16) there is a compression member (17), characterized in that the tapered head of the respective bushings (13, 14) press into a V-shaped ring groove (32) on the disc coating (23) and in that the wedge angles ($\beta$) of the bushings (13, 29, 14, 30) are greater than the groove angle ($\alpha$).

2. A butterfly valve according to claim 1 characterized in that each trunnion (9, 10) is enclosed by at least two bushings (13, 29, 14, 30) sequentially positioned on the axle one behind the other and in that the inner bushings (13, 14) have a V-groove (33) on their rearward side into each of which one of the outer bushings (29, 30) fits with its wedge-shaped facing (34).

3. A butterfly valve according to claims 1 and 2 characterized in that the transitory point (41) between the two bushings (13, 29 and 14, 30 respectively) is located within the lining of the casing (4).

4. A butterfly valve according to claim 1 characterized in that the tip of the wedge (39, 40) is flattened off.

5. A butterfly valve according to one or more of claims 1 to 4 characterized in that the coating (23) of the shut-off disc (5) is made of PFA, and in that the bushings (13, 29, 14, 30) are made of PTFE.

FIG.1

FIG.2

FIG.3

FIG.4

FIG.5

FIG.7

FIG.6